(19) Europäisches Patentamt
European Patent Office
Office européen des brevets

(11) **EP 4 293 065 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **22178807.8**

(22) Anmeldetag: **14.06.2022**

(51) Internationale Patentklassifikation (IPC):
***C08G 64/02** (2006.01)* ***C08G 64/30** (2006.01)*
***C11D 1/76** (2006.01)* ***C08G 64/34** (2006.01)*
***C11D 1/74** (2006.01)* ***C08G 64/18** (2006.01)*

(52) Gemeinsame Patentklassifikation (CPC):
**C08G 64/0216; C08G 64/183; C08G 64/30; C08G 64/34; C11D 1/74**

(54) **POLYMERE ENTHALTEND EINEN POLYETHERCARBONAT-HALTIGEN BLOCK, HERSTELLUNGSVERFAHREN DAFÜR UND VERWENDUNG DER POLYMERE ALS TENSID**

POLYMERS CONTAINING A POLYETHER CARBONATE-CONTAINING BLOCK, PREPARATION METHOD THEREOF AND USE OF THE POLYMERS AS A TENSIDE

POLYMÈRES CONTENANT UN BLOC POLYÉTHER CARBONATE, LEUR PROCÉDÉ DE PRÉPARATION ET L'UTILISATION DES POLYMÈRES COMME TENSIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.12.2023 Patentblatt 2023/51**

(73) Patentinhaber: **Covestro Deutschland AG**
**51373 Leverkusen (DE)**

(72) Erfinder:
- **Wolf, Aurel**
  **42489 Wülfrath (DE)**
- **Guertler, Christoph**
  **50735 Köln (DE)**
- **Linker, Olga**
  **51371 Leverkusen (DE)**
- **Schuetze, Mike**
  **51379 Leverkusen (DE)**
- **Sebastian, Marina**
  **53507 Dernau (DE)**
- **Schomaecker, Reinhard**
  **13589 Berlin (DE)**
- **Brueggemann, Daniel**
  **13589 Berlin (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A1- 3 988 600** **EP-A2- 0 338 396**
**WO-A1-2021/032554**

- **ABDUL-KARIM RUBINA ET AL: "Synthesis and Characterization of Novel Biodegradable Di- and Tri-Block Copolymers Based on Ethylene Carbonate Polymer as Hydrophobic Segment", JOURNAL OF POLYMER SCIENCE PART A: POLYMER CHEMISTRY, vol. 55, no. 11, 20 April 2017 (2017-04-20), US, pages 1887 - 1893, XP055968340, ISSN: 0887-624X, Retrieved from the Internet <URL:https://api.wiley.com/onlinelibrary/tdm/v1/articles/10.1002%2Fpola.28559> DOI: 10.1002/pola.28559**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 293 065 B1

## Beschreibung

Die vorliegende Erfindung betrifft Polymere die eine Mischung aus Verbindungen mit der Struktur ABA, AB und gegebenenfalls B sind, wobei A ein kohlenwasserstoffhaltiger Block und B ein polyethercarbonathaltiger Block sind, sowie ein Verfahren zur Herstellung dieser Polymere und deren Verwendung.

Insbesondere in Waschmittelzusammensetzungen ist der Einsatz von Tensiden wichtig, damit die Oberflächenspannung herabgesetzt wird und die Vermischung von unpolarer und polarer Phase vonstattengeht. Der Einsatz von Tensiden ist dabei jedoch begrenzt durch die kritische Mizellbildungskonzentration (CMC), bei der die Tenside sich nicht mehr an die Oberfläche anlagern, sondern Mizellen bilden. Ab der sogenannten kritischen Mizellbildungskonzentration wird durch Zugabe von weiteren Tensiden keine Verringerung der Oberflächenspannung mehr erreicht. Als Tenside werden dabei Polymere in Form von Ethoxylaten eingesetzt, die auf Erdölprodukten basieren. Eine Reduktion von Erdölprodukten in solchen Polymeren kann beispielsweise durch Polyethercarbonatpolyole reduziert werden, bei denen ein Teil der Bausteine auf Basis von Erdöl durch $CO_2$-Gruppen ersetzt wird.

Die WO 2019/076862 A1 beschreibt eine Methode zur Herstellung von Diblockcopolymeren mit einem kohlenwasserstoffhaltigen Block und einem polyethercarbonathaltigen Block durch Anlagerung von Alkylenoxid und Kohlenstoffdioxid an eine H-funktionelle Startersubstanz mit einer OH-Funktionalität von 1 in Anwesenheit eines DMC-Katalysators. Diese Diblockcopolymere können auch als Tenside eingesetzt werden. Es wird jedoch keine kritische Mizellbildungskonzentration offenbart und auch keine ABA-Strukturen.

Polyethercarbonathaltige Blockcopolymere, welche als Tenside eingesetzt werden können, werden auch in EP 0 338 396 A2 offenbart.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572), Zinn-Verbindungen, wie Zinndioxid oder Dibutylzinnoxid (DE 2 523 352), Alkalimetallcarbonate oder -acetate (DE 1 495 299 A1) durchgeführt. Ebenfalls offenbart ist der Einsatz von $Na_3VO_4$ und $Na_2WO_4$ als Katalysatoren für die Herstellung von Polyethercarbonatpolyolen durch Anlagerung cyclischen Ethylencarbonats an Monoethylenglykol und Diethylenglykol (R.F. Harris, Journal of Applied Polymer Science, 1989, 37, 183-200). Es werden hierbei jedoch keine ABA-Strukturen offenbart und auch kein Einfluss dieser auf die kritische Mizellbildungskonzentration.

Die Aufgabe der vorliegenden Erfindung bestand deshalb darin, ein Polymer mit geringeren Anteilen an Erdölbasierten Produkten bereitzustellen, welches zu einer erhöhten kritischen Mizellbildungskonzentration führt.

Überraschend wurde gefunden, dass die technische Aufgabe gelöst wird durch ein Polymer, enthaltend einen kohlenwasserstoffhaltigen Block A und einen polyethercarbonathaltigen Block B, dadurch gekennzeichnet, dass
das Polymer eine Mischung aus Verbindungen mit der Struktur AB, ABA und gegebenenfalls B ist,

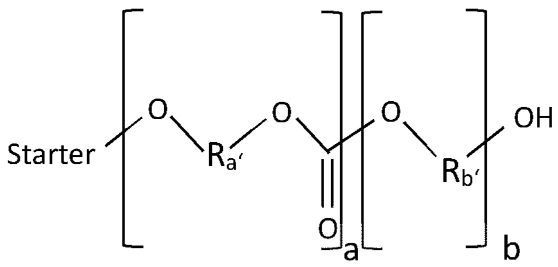

AB

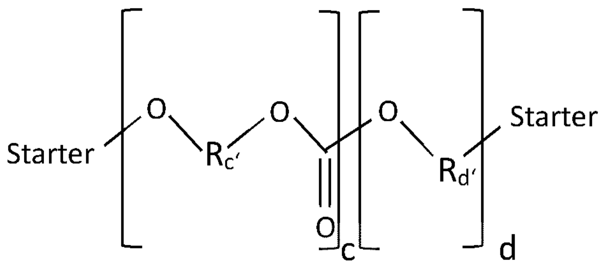

ABA

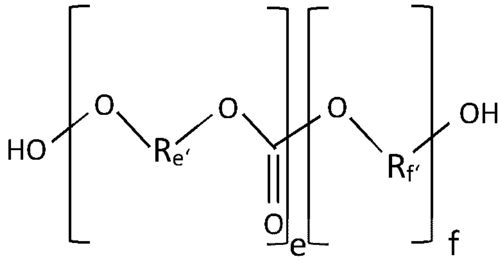

B

wobei

Starter für den Rest einer H-funktionellen Startersubstanz steht, und keine OH-Gruppe aufweist,

$R_{a'}$, $R_{b'}$, $R_{c'}$, $R_{d'}$, $R_{e'}$, $R_{f'}$ unabhängig voneinander jeweils für einen aliphatischen Kohlenwasserstoffrest mit 2 bis 8 Kohlenstoffatomen, bevorzugt 2 bis 6 Kohlenstoffatomen, besonders bevorzugt 2 bis 4 Kohlenstoffatomen stehen,

a, b, c, d, e, f unabhängig voneinander jeweils für eine Zahl von 1 bis 20 stehen,

wobei der Anteil der Verbindungen mit der Struktur AB mindestens 80 Gew.-%, bevorzugt mindestens 82 Gew.-%, besonders bevorzugt mindestens 84 Gew.-%, und der Struktur ABA 1,20 bis 20,00 Gew.-%, bevorzugt 1,40 bis 18 Gew.-%, besonders bevorzugt 1,60 bis 16 Gew.-%, betragen, jeweils bezogen auf das Gesamtgewicht der Verbindungen mit den Strukturen AB, ABA und B.

Der Starter weist bevorzugt 5 bis 24 Kohlenstoffatome, besonders bevorzugt 8 bis 20 Kohlenstoffatome, insbesondere bevorzugt 12 bis 18 Kohlenstoffatome auf. Es ist ebenfalls bevorzugt, dass der Starter der Rest einer H-funktionellen Startersubstanz ist, die nur eine OH-Funktion aufweist, wobei die OH-Funktion mit dem kohlenwasserstoffhaltigen Block A oder dem polyethercarbonathaltigen Block B reagiert hat.

In einer besonderen Ausführungsform weisen die Polymere ein zahlenmittleres Molekulargewicht nach DIN 55672-1 (August 2007) von 200 bis 20000 g/mol auf, besonders bevorzugt von 300 bis 10000 g/mol, insbesondere bevorzugt von 500 bis 2000 g/mol.

Weiterhin betrifft die Erfindung ein Verfahren zur Herstellung der Polymere, bevorzugt durch Anlagerung eines cyclischen Carbonats an eine H-funktionelle Startersubstanz, besonders bevorzugt eine H-funktionelle Startersubstanz mit einer OH-Funktionalität von 1. In einer besonderen Ausführungsform handelt es um eine H-funktionelle Startersubstanz mit einer OH-Funktionalität von 1, welche keine weiteren H-funktionellen Gruppen aufweist.

Als H-funktionelle Startersubstanz für die Polymere können beispielsweise monofunktionelle Alkohole oder Monocarbonsäuren eingesetzt werden. Bevorzugt weist die H-funktionelle Startersubstanz 5 bis 24 Kohlenstoffatomen, besonders bevorzugt 8 bis 20 Kohlenstoffatomen, insbesondere bevorzugt 12 bis 18 Kohlenstoffatome auf. Beispiele für Verbindungen die als H-funktionelle Startersubstanz eingesetzt werden können, sind Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Decanol, Undecanol, Dodecanol, Tridecanol, Tetradecanol, Pentadecanol, Hexadecanol, Heptadecanol, Octadecanol, Nonadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure. Es können auch anorganisch, monofunktionelle Sauerstoffsäuren wie beispielsweise p-Toluolsulfonsäure eingesetzt werden. Bevorzugt wird als H-funktionale Startersubstanz mindestens eine Verbindung aus der Gruppe bestehend aus Dodecanol, Tetradecanol, Hexadecanol, Octadecanol und Hexadecansäure eingesetzt.

Bei dem Verfahren kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Carbonat in den Reaktor gefüllt werden. Alternativ kann auch erst der Katalysator in einer H-funktionellen Startersubstanz

suspendiert und anschließend die Suspension in den Reaktor gefüllt werden.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C Inertgas (beispielsweise Argon oder Stickstoff) eingeleitet.

In einer alternativen bevorzugten Ausführungsform wird das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form, gelöster Form oder als Suspension in cyclischem Carbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 120°C bis 230°C, bevorzugt 130°C bis 200°C, besonders bevorzugt 140°C bis 190°C erhitzt, wobei gegebenenfalls ein Inertgas-Strom (beispielsweise von Argon oder Stickstoff) durch den Reaktor geleitet werden kann. Die Reaktion wird solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

Die Polymere können in einem batch, semi-batch oder kontinuierlichen Verfahren hergestellt werden. Bevorzugt werden die Polymere in einem kontinuierlichen Verfahren hergestellt, das sowohl eine kontinuierliche Polymerisation als auch eine kontinuierliche Zugabe der H-funktionellen Startersubstanz umfasst.

Gegenstand der Erfindung ist daher auch ein Verfahren, wobei H-funktionelle Startersubstanz, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist.

Eine inkrementelle Zugabe von Katalysator und/oder Reaktand, der die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem

vorherigen Punkt im Verfahren zurückgeführt wird, wodurch durch inkrementelle Zugaben bewirkte Diskontinuitäten geglättet werden.

Als geeignete Katalysatoren für die Anlagerung von cyclischen Carbonat an H-funktionelle Startersubstanzen werden beispielsweise Diazabicycloundecen (DBU), 1,5,7-Triazabicyclo[4.4.0]dec-5-en (TBD) oder N-Heterocyclische Carbene (NHC), bevorzugt Katalysatoren gemäß Formel (I) eingesetzt

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $SnO_3^{2-}$, $CO_3^{2-}$, $PO_4^{3-}$, $RCOO^-$, $VO_3^-$, $WO_4^{2-}$, $MoO_4^{2-}$ und $VO_4^{3-}$,
n ist 1, wenn X = $VO_3^-$, $RCOO^-$
n ist 2, wenn X = $SnO_3^{2-}$, $CO_3^{2-}$, $WO_4^{2-}$ oder $MoO_4^{2-}$
n ist 3, wenn X = $PO_4^{3-}$ oder $VO_4^{3-}$,
R ein organischer Rest ist.

Das Anion X des Katalysators gemäß Formel (I) ist bevorzugt $SnO_3^{2-}$, $VO_3^-$, $VO_4^{3-}$ oder $PO_4^{3-}$. Als Alkalimetallkation M wird bevorzugt $Na^+$ oder $K^+$ eingesetzt. Insbesondere bevorzugt wird als Katalysator eine Verbindung ausgewählt aus der Gruppe bestehen aus $Na_2SnO_3$, $K_2SnO_3$, $Na_3PO_4$ und $K_3PO_4$ eingesetzt, ganz besonders bevorzugt $Na_2SnO_3$ und $K_2SnO_3$. Der organische Rest R kann ein gesättigter oder ungesättigter, linearer oder verzweigter, aliphatischer oder cycloaliphatischer oder einen aromatischen oder araliphatischen Rest sein, der gegebenenfalls Heteroatome, wie N, S oder O enthalten kann. Bevorzugt handelt es sich bei dem organischen Rest R um einen C1 bis C12-Alkylrest, besonders bevorzugt handelt es sich um einen Methylrest.

Die erfindungsgemäßen Polymere können für Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder zur Herstellung von Polyurethanen eingesetzt werden. Bevorzugt werden die Polymere als Tenside für Waschmittelzusammensetzung eingesetzt. Bestandteil der Erfindung ist deshalb auch eine Waschmittelzusammensetzung, enthaltend die Komponenten

(A) Tensid, enthaltend das erfindungsgemäße Polymer,

(B) Enzyme,
und gegebenenfalls

(C) weitere Hilfsmittel, Füllstoffe und/oder Lösungsmittel.

Die Komponente (A) kann zusätzlich zu dem erfindungsgemäßen Polymer weitere, dem Fachmann bekannte Tenside enthalten. Beispiele für weitere Tenside sind anionische Tenside wie z.B. Alkylsulfonate, Fettalkoholsulfate, Alkylcarboxylate Alkylbenzolsulfonate oder Alkylethersulfate, oder nicht-ionische Tenside, wie z.B. Fettalkoholethoxylate, Fettalkoholpropoxylate, Alkylglucoside, Alkylpolyglucoside oder Alkylphenolethoxylate. Bevorzugt werden Verbindungen eingesetzt, die auf Fettalkoholen basieren, wobei die Fettalkohole besonders bevorzugt 8 bis 20 Kohlenstoffatome, insbesondere bevorzugt 12 bis 18 Kohlenstoffatome aufweisen.

Als Enzyme (B) zur Entfernung von stärke-, eiweiß- oder fetthaltigen Flecken geeignete Verbindungen sind beispielsweise Lipasen, Amylasen oder Proteasen. Es können aber auch weitere Enzyme wie beispielsweise Cellulasen eingesetzt werden.

Dem Fachmann ist bekannt, dass auch noch weitere Hilfsmittel, Füllstoffe und/oder Lösungsmittel für die Waschmittelzusammensetzung eingesetzt werden können. Als Beispiele hierfür genannt seien Bleichmittel, Enthärter, wie Zeolithe, Schichtsilikate oder Citrate, Duftstoffe, Weichmacher, Abtönungsfarbstoffe, Antioxidantien und antimikrobielle Wirkstoffe.

## Experimenteller Teil

Das Molekulargewicht $M_n$ der entstandenen Polymere wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen und Polystyrolproben mit bekannter Molmasse zur Kalibrierung verwendet.

Der Anteil an eingebautem $CO_2$ im resultierenden Polymere ($CO_2$-Gehalt) wurde mittels $^1$H-NMR Spektroskopie (Firma Bruker, AV III HD 600, 600 MHz; Pulsprogramm zg30, Wartezeit d1: 10s, 64 Scans) bestimmt. Die Probe wurde

jeweils in deuteriertem Chloroform gelöst. Die relevanten Resonanzen im $^1$H-NMR Spektrum (bezogen auf TMS = 0 ppm) sind wie folgt:

Für verbleibendes monomeres Ethylencarbonat (Signal bei 4,53 ppm), resultierend aus im Polyethercarbonatalkohol eingebautem Kohlendioxid (Resonanzen bei 4,37-3,21 und ggf. 4,19-4,07 ppm - abhängig vom gewählten Startermolekül), Polyetherpolyol (d.h. ohne eingebautem Kohlendioxid) mit Resonanzen bei 3,80-3,55 ppm.

Der Molen Anteil des im Polymer eingebauten Carbonats in der Reaktionsmischung wird nach Formel (I) wie folgt berechnet, wobei folgende Abkürzungen verwendet werden:

| | |
|---|---|
| F(4,53) | = Fläche der Resonanz bei 4,53 ppm für cyclisches Carbonat (entspricht vier Protonen) |
| F(4,37-4,21) | = Fläche der Resonanz bei 4,37-4,21 ppm für Polyethercarbonatalkohol. |
| F(4,19-4,07) | = Fläche der Resonanz bei 4,19-4,07 ppm for Polyethercarbonatalkohol (Die Summe von F(4,37-4,21) und F(4,19-4,07) entspricht 4 Protonen) |
| F(3,8-3,55) | = Fläche der Resonanz bei 3,8-3,55 ppm für Polyetherpolyol (entspricht 4 Protonen) |

Unter Berücksichtigung der relativen Intensitäten wurde gemäß der folgenden Formel (I) für das polymer gebundene Carbonat ("lineares Carbonat" LC) in der Reaktionsmischung in Gew.-% berechnet:

$$LC_{gew.\%} = \frac{[F(4{,}37\text{–}4{,}21)+F(4{,}19\text{–}4{,}07)]\cdot 88}{N}\cdot 100\ \% \qquad \text{(I)}$$

wobei sich der Wert für *N* ("Nenner" *N*) nach Formel (III) berechnet:

$$\boldsymbol{N} = [(\mathbf{4{,}37\text{–}4{,}21}) + \mathbf{F(4{,}19\text{–}4{,}07)}]\cdot \mathbf{88} + \boldsymbol{F}\mathbf{(3{,}8 - 3{,}55)\cdot 44} \qquad \text{(II)}$$

Der Faktor 88 resultiert aus der Summe der Molmassen von $CO_2$ (Molmasse 44 g/mol) und der von Ethylenoxid (Molmasse 44 g/mol), der Faktor 44 resultiert aus der Molmasse von Ethylenoxid.

Der Gewichtsanteil (in Gew.-%) an $CO_2$ im Polymere wurde nach Formel (III) berechnet:

$$CO_{2_{gew.\%}} = LC_{gew.\%}\cdot\frac{44}{88} \qquad \text{(III)}$$

Um aus den Werten der Zusammensetzung der Reaktionsmischung die Zusammensetzung bezogen auf den Polymer-Anteil (bestehend aus Polymere, aufgebaut aus Starter, cyclischem Ethylencarbonat), wurden die Nicht-Polymer-Bestandteile der Reaktionsmischung (d.h. nicht umgesetztes cyclisches Ethylencarbonat) rechnerisch eliminiert. Der Gewichtsanteil der Carbonat-Wiederholungseinheiten im Polymere wurde in einen Gewichtsanteil Kohlendioxid mittels des Faktors F=44/(44+44) umgerechnet (Siehe Formel III). Die Angabe des $CO_2$-Gehalts im Polymere ("eingebautes $CO_2$"; siehe nachfolgende Beispiele) ist normiert auf das Polymere-Molekül, das bei der ringöffnenden Polymerisation entstanden ist.

Der Umsatz der Reaktionslösung wird nach Formel (IV) wie folgt berechnet, wobei folgende Abkürzungen verwendet werden (exemplarisch dargestellt für 1,6-Hexandiol als H-funktionelle Startersubstanz, für alternative Starter wurde die Berechnung entsprechend angepasst):

F(1.78 - 1.29) = Normierte Fläche der Resonanz bei 1.78 - 1.29 ppm für 1,6-Hexandiol (definiert als 8 Protonen)
F(4.36 - 3.20) = Normierte Fläche der Resonanz bei 4.36 - 3.20 ppm für Polyethercarbonatalkohol und 1,6-Hexandiol (verbleibende 4 Protonen).

Aus dem Verhältnis von H-funktioneller Startersubstanz (z.B. 1,6-Hexandiol: 12 H) zu Monomer ergibt sich, dass 31,57 Protonen aus cEC im Reaktionsgemisch vorliegen (Stoffmengenverhältnis von n(cEC)/n(1,6-HD) = 7.89).

Unter Berücksichtigung der relativen Intensitäten wurde gemäß der folgenden Formel (IV) der Umsatz berechnet:

$$Umsatz_{mol\%} = \frac{F(4.36 - 3.20) - \frac{F(1.78 - 1.29)}{2}}{31{,}57}\cdot 100\ \% \qquad \text{(IV)}$$

Zur Bestimmung des HLB-Wertes der Polymere wird die Korrelation zwischen Phaseninversionstemperatur (PIT) und HLB-Wert ausgenutzt. Die PIT ist dabei die Temperatur, bei der aus einer Wasser-in-Öl-Emulsion eine Öl-in-Wasser-Emulsion wird. Die PIT der Polymere wird durch Messungen der elektrischen Leitfähigkeit in Abhängigkeit von der Temperatur an einer Emulsion aus Wasser (47 Gew.-%), Oktan (47 Gew.-%) und dem jeweiligen Polymer (6 Gew.-%) ermittelt. Die PIT ist durch einen charakteristischen Abfall der Leitfähigkeit erkennbar. Auf Grund der Korrelation zwischen PIT und HLB-Wert kann durch einen Abgleich mit bekannten nicht-ionischen Tensiden der HLB-Wert der Polymere ermittelt werden.

Für die Messung der Oberflächenspannung wurde ein Krüss Blasendrucktensiometer (Modell BP50) verwendet. Für einfache Messungen der Grenzflächenaktivität und der Oberflächenspannung werden 0,05 L einer 1 g/L Tensid-Lösungen in Micropurwasser verwendet.

Für Messungen der kritischen Mizellbildungskonzentration (CMC) werden 0,05L einer 20 g/L Tensid-Stammlösungen des Tenside in Micropurwasser angesetzt und selbige am Blasendrucktensiometer vermessen, um die minimale Oberflächenspannung zu bestimmen. Aus dieser Stammlösung werden Verdünnungen hergestellt von 0,025 g/L bis 1,6 g/L je 0,05 L in Micropurwasser und diese Vermessen. Die Konzentrationen der Verdünnungen werden je nach Ergebnis angepasst um mindestens je 3 Messungen unter und oberhalb der CMC zu erhalten. Sollte dafür die Stammlösung nicht ausreichen, wird eine höher Konzentrierte Stammlösung angesetzt und neue Verdünnungen hergestellt und diese neue vermessen.

Zur Bestimmen der Anteile der B-, AB- und ABA-Polymere Fraktionen wurden die Proben auf 1 mg/ml in Methanol verdünnt und per LC-eLSD untersucht (TMA500032). Die Polymere wurden per Umkehrphasen HPLC mit Gradientenelution (5-100% ACN über 10 min) bei 45°C auf einer Agilent EC-C18 (50x3mm, 2,7μm dp) getrennt. Zur Kontrolle wurden die Proben ebenfalls mit THF als Mobile Phase B getrennt um sicherzustellen, dass jeweils der komplette Polymer mit ACN eluiert wird. Dies war für alle Proben der Fall. Nach der Trennung wurde per eLSD detektiert. Es wurden 1 μL injiziert. Zur Auswertung wurden die Flächenintegrale in der folgenden Grenzen bestimmt: B-Fraktion: 2-8 min; AB-Fraktion: 8-10 min; ABA-Fraktion: 10-13 min.

Eingesetzte Rohstoffe:

Alle aufgezählten Chemikalien wurden vom genannten Hersteller in der angegebenen Reinheit erworben und ohne weitere Behandlung für die Synthese von Polymeren verwendet.

| | |
|---|---|
| cEC | Cyclisches Ethylencarbonat (Sigma-Aldrich 99 %) |
| EO | Ethylenoxid (Linde AG) |
| FA C12 | Fettalkohol C12 (1-Dodecanol, Sigma-Aldrich ≥ 98%) |
| FS C12 | Fettsäure C12 (1-Dodecansäure, Sigma-Aldrich ≥ 98%) |
| FS C12-18 | Fettsäure C12-18 (CremerAC C 12-18 H, Cremer Oleo) |
| $K_3PO_4$ | Kaliumphosphat (Sigma-Aldrich ≥ 98%) |
| $K_2SnO_3 \cdot 3H_2O$ | Kaliumstannat Trihydrat (Sigma-Aldrich 99,9%) |
| $Na_3VO_4$ | Natriumorthovanadat (Sigma-Aldrich 99,9%) |
| DMC | Nach Beispiel 6 von WO-A 01/80994 |

**Beispiel 1: Herstellung eines Polymeren durch Ringöffnungspolymerisation von cEC mit FS C12 (1-Dodecansäure) als Starter und $K_3PO_4$ als Katalysator bei 170 °C**

In einem 500 mL Vierhalsglaskolben mit Rückflusskühler, KPG-Rührer, Thermofühler, Stickstoffzuleitung und Überdruckventil wurden 250 g Ethylencarbonat, 51,70 g FS C12 (1-Dodecansäure) und 3,01 g $K_3PO_4$ zugegeben. Es wurden für 10 Minuten 10 L/h Stickstoff eingeleitet. Das Gemisch wurde unter Rühren bei 300 U/min auf 170 °C aufgeheizt. Die Reaktionsmischung wurde bis zum vollständigen Umsatz von Ethylencarbonat bei der eingestellten Temperatur gerührt. Als Zeitpunkt des vollständigen Umsatzes wurde der Moment genommen, bei dem die Gasentwicklung zum Erliegen kommt. Das Reaktionsgemisch wurde 60 min bei 8500 rpm zentrifugiert und anschließend dekantiert.

**Beispiel 2: Herstellung eines Polymeren durch Ringöffnungspolymerisation von cEC mit FS C12-18 (CremerAC C 12-18 H) als Starter und $K_3PO_4$ als Katalysator bei 170 °C**

Die Durchführung erfolgte gemäß Beispiel 1, wobei jedoch 350 g Ethylencarbonat, 79,49 g FS C12-18 (CremerAC C 12-18 H) und 4,21 g $K_3PO_4$ eingesetzt wurden.

**Beispiel 3: Herstellung eines Polymeren durch Ringöffnungspolymerisation von cEC mit FS C12 (1-Dodecansäure) als Starter und $K_2SnO_3 \cdot 3H_2O$ als Katalysator bei 150 °C**

Die Durchführung erfolgte gemäß Beispiel 1, wobei jedoch 200 g Ethylencarbonat, 41,36 g FS C12 (1-Dodecansäure) und 3,39 g $K_2SnO_3 \cdot 3H_2O$ eingesetzt wurden und die Reaktionstemperatur 150 °C betrug.

**Beispiel 4: Herstellung eines Polymers durch Ringöffnungspolymerisation von cEC mit FA C12 (1-Dodecanol) als Starter und $K_3PO_4$ als Katalysator bei 170 °C**

In einem 500 mL Vierhalsglaskolben mit Rückflusskühler, KPG-Rührer, Thermofühler, Stickstoffzuleitung und Überdruckventil wurden 250 g Ethylencarbonat, 48,09 g FA C12 (1-Dodecanol) und 3,01 g $K_3PO_4$ zugegeben. Es wurden für 10 Minuten 10 L/h Stickstoff eingeleitet. Das Gemisch wurde unter Rühren bei 300 U/min auf 170 °C aufgeheizt. Die Reaktionsmischung wurde bis zum vollständigen Umsatz von Ethylencarbonat bei der eingestellten Temperatur gerührt. Als Zeitpunkt des vollständigen Umsatzes wurde der Moment genommen, bei dem die Gasentwicklung zum Erliegen kommt. Das Reaktionsgemisch wurde 60 min bei 8500 rpm zentrifugiert und anschließend dekantiert.

**Beispiel 5: Herstellung eines Polymers durch Ringöffnungspolymerisation von cEC mit FA C12 (1-Dodecanol) als Starter und $K_2SnO_3 \cdot 3H_2O$ als Katalysator bei 150 °C**

Die Durchführung erfolgte gemäß Beispiel 4, wobei jedoch 250 g Ethylencarbonat, 48,09 g FA C12 (1-Dodecanol) und 4,24 g $K_2SnO_3 \cdot 3H_2O$ eingesetzt wurden und die Reaktionstemperatur 150 °C betrug.

**Beispiel 6: Herstellung eines Polymers durch Copolymerisation von EO und $CO_2$ mit FA C12 (1-Dodecanol) als Starter und DMC Katalysator**

Schritt (a):

In einem 2 Liter Druckreaktor mit Gasdosierungseinrichtung wurden 200 mg getrockneter DMC-Katalysator (hergestellt nach Beispiel 6 von WO-A 01/80994) sowie 144,10 g 1-Dodecanol vorgelegt. Die Suspension wurde dann auf 130 °C aufgeheizt und für 30 min ein konstanter Stickstoffstrom und ein reduzierter Druck von 100 mbar angelegt.

Schritt (b):

Anschließend wurde der Reaktor mit 50 bar $CO_2$ bei 130 °C beaufschlagt und 10 g Ethylenoxid auf einmal in den Reaktor eindosiert. Die Aktivierung des Katalysators machte sich durch eine Temperaturspitze ("Hotspot") und durch Druckabfall auf den Ausgangsdruck (50 bar) bemerkbar. Der Vorgang wurde ein weiteres Mal wiederholt.

Schritt (c):

Nach der erfolgten Aktivierung wurde die Temperatur auf 100 °C eingestellt und 504,6 g Ethylenoxid innerhalb von 3 h in den Reaktor eindosiert. Der Fortschritt der Reaktion wurde an dem $CO_2$-Verbrauch beobachtet, wobei durch kontinuierliche geregelte Nachdosierung der Druck bei dem oben angegebenen Druck (vgl. Schritt (b)) im Reaktor konstant gehalten wurde. Nach beendeter EO-Zugabe wurde bei dem oben angegebenen Druck weitergerührt, bis kein Verbrauch an $CO_2$ mehr beobachtet wurde (ca. 1 h). Das Produkt wurde anschließend aus dem Reaktor entnommen und am Rotationsverdampfer von leicht flüchtigen Komponenten befreit.

**Tabelle 1: Charakterisierungsdaten der Polymere.**

| Beispiel | Katalysator | PDI | $CO_2$ [Gew.-%] | HLB | CMC [g/L] | B/AB/ABA |
|---|---|---|---|---|---|---|
| 1 | $K_3PO_4$ | 1,73 | 13,9 | 12,2 | 0,50 | 21,0 / 86,1 / 1,8 |
| 2* | $K_3PO_4$ | 1,53 | 13,8 | 12,2 | 0,44 | 22,5 / 63,6 / 13,7 |
| 3 | $K_2SnO_3 \cdot 3H_2O$ | 1,79 | 26,2 | 11,7 | 1,26 | 6,8 / 85,7 / 7,3 |
| 4* | $K_3PO_4$ | 1,62 | 14,8 | 12,4 | 0,35 | 3,2 / 95,5 / 1,1 |
| 5 | $K_2SnO_3 \cdot 3H_2O$ | 1,77 | 29,6 | 12,2 | 4,35 | 13,6 / 84,7 / 1,6 |

(fortgesetzt)

| Beispiel | Katalysator | PDI | $CO_2$ [Gew.-%] | HLB | CMC [g/L] | B/AB/ABA |
|---|---|---|---|---|---|---|
| 6* | DMC | 1,03 | 5,0 | 14,3 | 0,36 | 14,8 / 85,1 / 0,0 |
| * Referenz- oder Vergleichsbeispiel | | | | | | |

Wie in Tabelle 1 zu erkennen, weisen Polymere mit einem Anteil von weniger als 1,2 Gew.-% der ABA-Struktur einen niedrigen CMC-Wert auf (Beispiele 4 und 6). In Beispiel 2 ist ebenfalls erkennbar, dass bei einem Anteil der AB-Struktur im Polymer von weniger als 80 Gew.-% (Beispiel 2) ebenfalls ein geringerer CMC-Wert erhalten wird, als bei den erfindungsgemäßen Polymeren der Beispiele 1, 3 und 5. Diese Polymere weisen einen Anteil von mehr als 80 Gew.-% einer AB-Struktur und mindesten 1,2 Gew.-% einer ABA-Struktur auf. Die erfindungsgemäßen Polymere führen dabei zu einem erhöhten CMC-Wert gegenüber den Referenz- oder Vergleichsbeispielen.

## Patentansprüche

1. Polymer, enthaltend einen kohlenwasserstoffhaltigen Block A und einen polyethercarbonathaltigen Block B, **dadurch gekennzeichnet, dass**
das Polymer eine Mischung aus Verbindungen mit der Struktur AB, ABA und gegebenenfalls B ist,

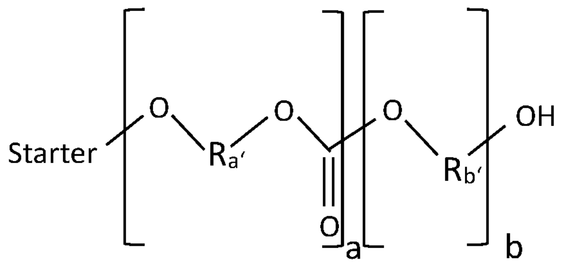

AB

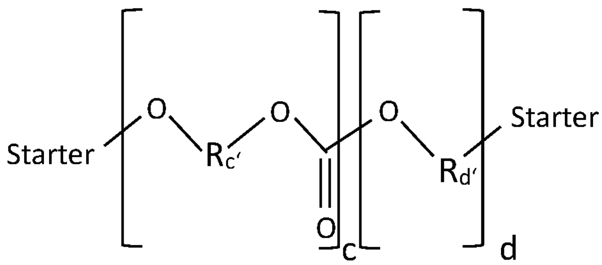

ABA

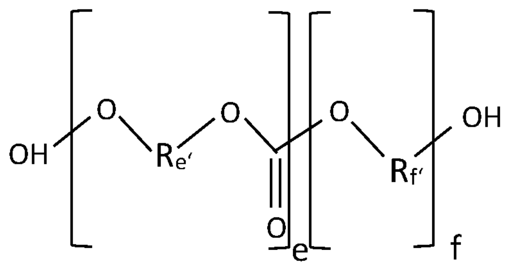

B

wobei

Starter für den Rest einer H-funktionellen Startersubstanz ohne die reagierte OH-Gruppe steht und keine weitere OH-Gruppe aufweist,
$R_{a'}$, $R_{b'}$, $R_{c'}$, $R_{d'}$, $R_{e'}$, $R_{f'}$ unabhängig voneinander jeweils für einen aliphatischen Kohlenwasserstoffrest mit 2 bis 8 Kohlenstoffatomen stehen,
a, b, c, d, e, f unabhängig voneinander jeweils für eine Zahl von 1 bis 20 stehen,
wobei der Anteil der Verbindungen mit der Struktur AB mindestens 80 Gew.-% und der Struktur ABA 1,20 bis

20,00 Gew.-% betragen, jeweils bezogen auf das Gesamtgewicht der Verbindungen mit den Strukturen AB, ABA und B.

**2.** Polymer gemäß Anspruch 1, **dadurch gekennzeichnet, dass** die Struktur ABA in einem Anteil von 1,50 bis 15,00 Gew.-% vorliegt.

**3.** Polymer gemäß Anspruch 1 oder 2, **dadurch gekennzeichnet, dass** a, c und e unabhängig voneinander für eine Zahl zwischen 1 und 5 stehen.

**4.** Polymer gemäß einem der Ansprüche 1 bis 3, **dadurch gekennzeichnet, dass** b, d und f unabhängig voneinander für eine Zahl zwischen 5 und 15 stehen.

**5.** Polymer gemäß einem der Ansprüche 1 bis 4, **dadurch gekennzeichnet, dass** der Starter in den Strukturen AB und ABA abgeleitet ist von einem substituierten oder unsubstituierten monofunktionellen Alkohol mit 5 bis 24 Kohlenstoffatomen oder einer substituierten oder unsubstituierten Monocarbonsäure mit 5 bis 24 Kohlenstoffatomen.

**6.** Polymer gemäß Anspruch 5, **dadurch gekennzeichnet, dass** der Starter in der Struktur AB und ABA keine weitere gegenüber Isocyanaten reaktive Gruppe aufweist.

**7.** Polymer gemäß einem der Ansprüche 1 bis 3, **dadurch gekennzeichnet, dass** der Starter in der Struktur AB und ABA abgeleitet ist von einer Verbindungen der Gruppe bestehend aus Decanol, Undecanol, Dodecanol, Tridecanol, Tetradecanol, Pentadecanol, Hexadecanol, Heptadecanol, Octadecanol, Nonadecanol, Eicosanol, p-Toluolsulfonsäure, Hexadecansäure.

**8.** Verfahren zur Herstellung eines Polymers gemäß einem der Ansprüche 1 bis 7.

**9.** Verfahren gemäß Anspruch 8, **dadurch gekennzeichnet, dass** das Polymer durch Anlagerung eines cyclischen Carbonats an eine H-funktionelle Startersubstanz mit einer OH-Funktionalität 1 erhalten wird.

**10.** Verfahren gemäß Anspruch 8 oder 9, **dadurch gekennzeichnet, dass** ein Katalysator gemäß der Formel (I)

$$M_nX \qquad (I),$$

wobei

M ausgewählt ist aus den Alkalimetallkationen $Li^+$, $Na^+$, $K^+$ und $Cs^+$,
X ausgewählt ist aus den Anionen $PO_4^{3-}$, $VO_3^-$, $WO_4^{2-}$, $MoO_4^{2-}$ und $VO_4^{3-}$, $SnO_3^{-2}$,
n ist 1, wenn $X = VO_3^-$,
n ist 2, wenn $X = WO_4^{2-}$, $SnO_3^{2-}$ oder $MoO_4^{2-}$
n ist 3, wenn $X = PO_4^{3-}$ oder $VO_4^{3-}$,
eingesetzt wird.

**11.** Verfahren gemäß einem der Ansprüche 9 bis 10, **dadurch gekennzeichnet, dass** als cyclisches Carbonat Ethylencarbonat, Propylencarbonat oder ein Gemisch aus beiden eingesetzt wird.

**12.** Verfahren gemäß einem der Ansprüche 9 bis 12, **dadurch gekennzeichnet, dass** die H-funktionelle Startersubstanz mit einer OH-Funktionalität von 1 ein substituierten oder unsubstituierten monofunktioneller Alkohol mit 5 bis 24 Kohlenstoffatomen oder eine substituierte oder unsubstituierte Monocarbonsäure mit 5 bis 24 Kohlenstoffatomen ist.

**13.** Verwendung eines Polymers gemäß einem der Ansprüche 1 bis 7 für Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder zur Herstellung von Polyurethanen..

**14.** Waschmittelzusammensetzung, enthaltend die Komponenten

(A) Tensid, enthaltend ein Polymer gemäß einem der Ansprüche 1 bis 7,
(B) Enzyme,

und gegebenenfalls
(C) weitere Hilfsmittel, Füllstoffe und/oder Lösungsmittel.

## Claims

1. A polymer, containing a hydrocarbon-containing block A and a polyether carbonate-containing block B, **characterized in that**
the polymer is a mixture of compounds with the structure AB, ABA and possibly B,

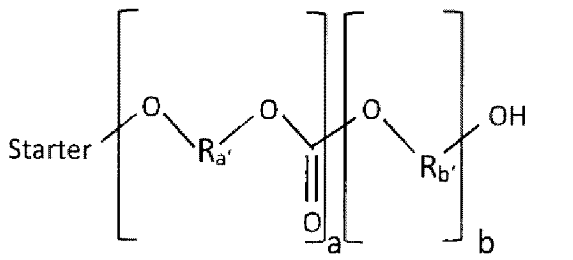

AB

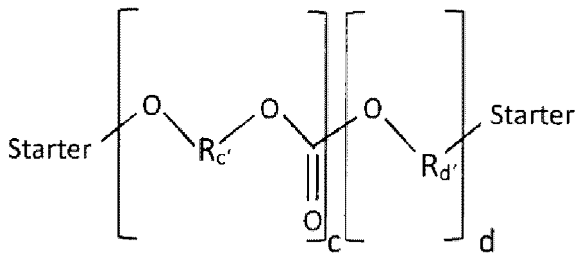

ABA

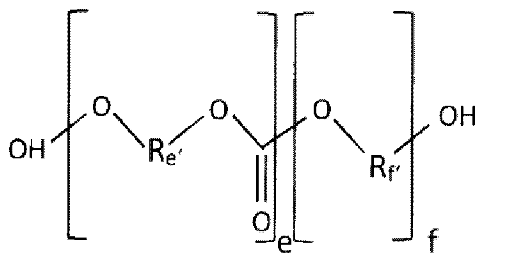

B

wherein

starter represents the rest of an H-functional starter substance without the reacted OH group and includes no further OH group,
$R_{a'}$, $R_{b'}$, $R_{c'}$, $R_{d'}$, $R_{e'}$, $R_{f'}$ independently each represent an aliphatic hydrocarbon radical with 2 to 8 carbon atoms,
a, b, c, d, e, f independently each represent a number of 1 to 20,
wherein the amount of compounds with the structure AB is at least 80 wt-% and with the structure ABA is 1.20 to 20.00 wt-%, each based on the total weight of the compounds with the structures AB, ABA and B.

2. The polymer according to claim 1, **characterized in that** the structure ABA is present in an amount of 1.50 to 15.00 wt-%.

3. The polymer according to claim 1 or 2, **characterized in that** a, c and e independently represent a number between 1 and 5.

4. The polymer according to any of claims 1 to 3, **characterized in that** b, d and f independently represent a number between 5 and 15.

5. The polymer according to any of claims 1 to 4, **characterized in that** the starter in structures AB and ABA is derived from a substituted or unsubstituted monofunctional alcohol with 5 to 24 carbon atoms or a substituted or unsubstituted

monocarboxylic acid with 5 to 24 carbon atoms.

6. The polymer according to claim 5, **characterized in that** the starter in structure AB and ABA includes no further group reactive towards isocyanates.

7. The polymer according to any of claims 1 to 3, **characterized in that** the starter in structure AB and ABA is derived from a compound of the group consisting of decanol, undecanol, dodecanol, tridecanol, tetradecanol, pentadecanol, hexadecanol, heptadecanol, octadecanol, nonadecanol, eicosanol, p-toluene sulfonic acid, hexadecanoic acid.

8. A method for preparing a polymer according to any of claims 1 to 7.

9. The method according to claim 8, **characterized in that** the polymer is obtained by addition of a cyclic carbonate to an H-functional starter substance with an OH functionality of 1.

10. The method according to claim 8 or 9, **characterized in that** there is used a catalyst according to formula (I)

$$M_nX \qquad (I),$$

wherein

M is selected from the alkali metal ions $Li^+$, $Na^+$, $K^+$ and $Cs^+$,
X is selected from the anions $PO_4^{3-}$, $VO_3^-$, $WO_4^{2-}$, $MoO_4^{2-}$ and $VO_4^{3-}$, $SnO_3^{2-}$,
n is 1, when X = $VO_3^-$,
n is 2, when X = $WO_4^{2-}$, $SnO_3^{2-}$ or $MoO_4^{2-}$,
n is 3, when X = $PO_4^{3-}$ or $VO_4^{3-}$.

11. The method according to any of claims 9 to 10, **characterized in that** ethylene carbonate, propylene carbonate or a mixture of both is used as a cyclic carbonate.

12. The method according to any of claims 9 to 12, **characterized in that** the H-functional starter substance with an OH functionality of 1 is a substituted or unsubstituted monofunctional alcohol with 5 to 24 carbon atoms or a substituted or unsubstituted monocarboxylic acid with 5 to 24 carbon atoms.

13. Use of a polymer according to any of claims 1 to 7 for detergent and cleaning agent formulations, drilling fluids, fuel additives, ionic and non-ionic surfactants, dispersing agents, lubricants, process chemicals for paper and textile production, cosmetic formulations, or for preparing polyurethanes.

14. A detergent composition, containing the components

(A) surfactant, containing a polymer according to any of claims 1 to 7,
(B) enzymes,
and possibly
(C) further auxiliary agents, fillers and/or solvents.

## Revendications

1. Polymère, contenant un bloc A hydrocarboné et un bloc B contenant du polyéther carbonate, **caractérisé en ce que** le polymère est un mélange de composés avec la structure AB, ABA et, le cas échéant, B,

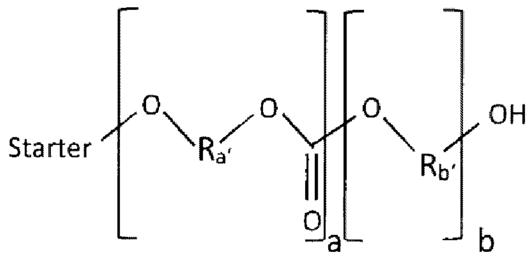

AB

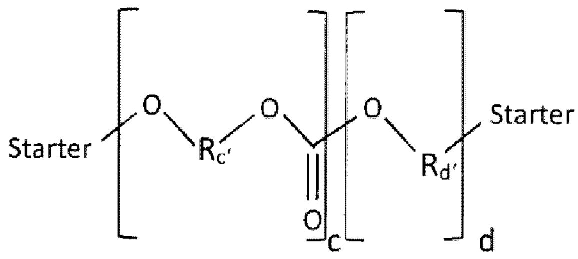

ABA

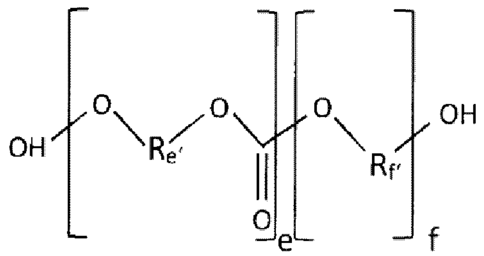

B

dans lequel

starter représente le reste d'une substance starter à fonction H sans le groupe OH ayant réagi et n'a pas d'autre groupe OH,
$R_{a'}$, $R_{b'}$, $R_{c'}$, $R_{d'}$, $R_{e'}$, $R_{f'}$ indépendamment l'un de l'autre chacun représentent un radical hydrocarboné aliphatique ayant de 2 à 8 atomes de carbone,
a, b, c, d, e, f indépendamment l'un de l'autre représentent un nombre de 1 à 20,
la proportion de composés avec la structure AB étant au moins 80 % en poids et avec la structure ABA étant 1,20 à 20,00 % en poids, respectivement, sur la base du poids total des composés avec les structures AB, ABA et B.

2. Polymère selon la revendication 1, **caractérisé en ce que** la structure ABA est présente dans une proportion de 1,50 à 15,00 % en poids.

3. Polymère selon la revendication 1 ou 2, **caractérisé en ce que** a, c et e indépendamment l'un de l'autre représentent un nombre compris entre 1 et 5.

4. Polymère selon l'une quelconque des revendications 1 à 3, **caractérisé en ce que** b, d et f indépendamment l'un de l'autre représentent un nombre compris entre 5 et 15.

5. Polymère selon l'une quelconque des revendications 1 à 4, **caractérisé en ce que** le starter dans les structures AB et ABA est dérivé d'un alcool monofunctionnel substitué ou non substitué ayant de 5 à 24 atomes de carbone ou d'un acide monocarboxylique substitué ou non substitué ayant de 5 à 24 atomes de carbone.

6. Polymère selon la revendication 5, **caractérisé en ce que** le starter dans la structure AB et ABA n'a pas d'autre groupe réactif aux isocyanates.

7. Polymère selon l'une quelconque des revendications 1 à 3, **caractérisé en ce que** le starter dans la structure AB et ABA est dérivé d'un composé du groupe constitué par le décanol, l'undécanol, le dodécanol, le tridécanol, le tétradécanol, le pentadécanol, l'hexadécanol, l'heptadécanol, l'octadécanol, le nonadécanol, l'eicosanol, l'acide p-toluènesulfonique, l'acide hexadécanoïque.

**8.** Procédé de préparation d'un polymère selon l'une quelconque des revendications 1 à 7.

**9.** Procédé selon la revendication 8, **caractérisé en ce que** le polymère est obtenu par l'addition d'un carbonate cyclique à une substance starter à fonction H ayant une fonctionnalité OH de 1.

**10.** Procédé selon la revendication 8 ou 9, **caractérisé en ce que** l'on utilise un catalyseur selon la formule (I)

$$M_nX \qquad (I),$$

dans laquelle

M est choisi parmi les cations de métaux alcalins $Li^+$, $Na^+$, $K^+$ et $Cs^+$,
X est choisi parmi les anions $PO_4^{3-}$, $VO_3^-$, $WO_4^{2-}$, $MoO_4^{2-}$ et $VO_4^{3-}$, $SnO_3^{2-}$,
n vaut 1 si X = $VO_3^-$,
n vaut 2 si X = $WO_4^{2-}$, $SnO_3^{2-}$ ou $MoO_4^{2-}$,
n vaut 3 si X = $PO_4^{3-}$ ou $VO_4^{3-}$.

**11.** Procédé selon l'une quelconque des revendications 9 à 10, **caractérisé en ce que** l'on utilise comme carbonate cyclique du carbonate d'éthylène, du carbonate de propylène ou un mélange des deux.

**12.** Procédé selon l'une quelconque des revendications 9 à 12, **caractérisé en ce que** la substance starter à fonction H ayant une fonctionnalité OH de 1 est un alcool monofonctionnel substitué ou non substitué ayant de 5 à 24 atomes de carbone ou un acide monocarboxylique substitué ou non substitué ayant de 5 à 24 atomes de carbone.

**13.** Utilisation d'un polymère selon l'une quelconque des revendications 1 à 7 pour des formulations de détergents et de nettoyants, des fluides de forage, des additifs pour carburants, des tensides ioniques et non ioniques, des dispersants, des lubrifiants, des produits chimiques pour la fabrication de papier ou de textiles, des formulations cosmétiques ou pour la préparation de polyuréthanes.

**14.** Composition détergente, contenant les composants

(A) un tenside, contenant un polymère selon l'une quelconque des revendications 1 à 7,
(B) des enzymes,
et, le cas échéant,
(C) d'autres adjuvants, charges et/ou solvants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2019076862 A1
- EP 0338396 A2
- EP 0343572 A
- DE 2523352
- DE 1495299 A1
- WO 0180994 A

### In der Beschreibung aufgeführte Nicht-Patentliteratur

- **R.F. HARRIS**. *Journal of Applied Polymer Science*, 1989, vol. 37, 183-200